# EUROPEAN PATENT APPLICATION

(11) **EP 2 046 071 A1**
(43) Date of publication of application: **08.04.2009**
(21) Application number: 07791519.7
(22) Date of filing: 23.07.2007
(51) Int. Cl.: H04Q 7/38, H04M 3/00, H04Q 7/20, H04Q 7/34

(54) **MOBILE COMMUNICATION SYSTEM, MOBILE COMMUNICATION TERMINAL, AND NETWORK SELECTION METHOD USED FOR THEM**

(30) Priority: 26.07.2006 JP 2006202657
(71) Applicant: NEC Corporation, Minato-ku Tokyo 108-8001 (JP)
(72) Inventor: HOKAO, Tomoaki, Tokyo 108-8001 (JP)
(74) Representative: Vossius & Partner
(86) International application number: PCT/JP2007/064825
(87) International publication number: WO 2008/013291

(57) **Abstract**

A mobile communication terminal includes: display means for displaying service providing information based on the service information reported from each of the networks on its network selection screen; and selection means for selecting one of the networks in accordance with an instruction from a user according to the service providing information.

## Description

### Technical Field

This invention relates to a mobile communication terminal and a mobile communication system including the mobile communication terminal and, in particular, relates to a network selection technique for a mobile communication terminal adapted for communications with a plurality of networks.

### Background Art

Network selection by a mobile communication terminal adapted for communications with a plurality of networks is defined as "Manual network selection mode" in the 3GPP (3rd Generation Partnership Project). This is described in, for example, "Non-Access-Stratum (NAS) functions related to Mobile Station (MS) in idle mode" [3GPP TS23.122 V7.5.0 (2006-06)]. This defined network selection is arranged as follows. That is, all Radio Access Technologies [UMTS (Universal Mobile Telecommunications System), GSM (Global System for Mobile communications), etc.] supported by a mobile communication terminal are searched. Then, all detected networks are notified to a user. Then, the user selects the desired network.

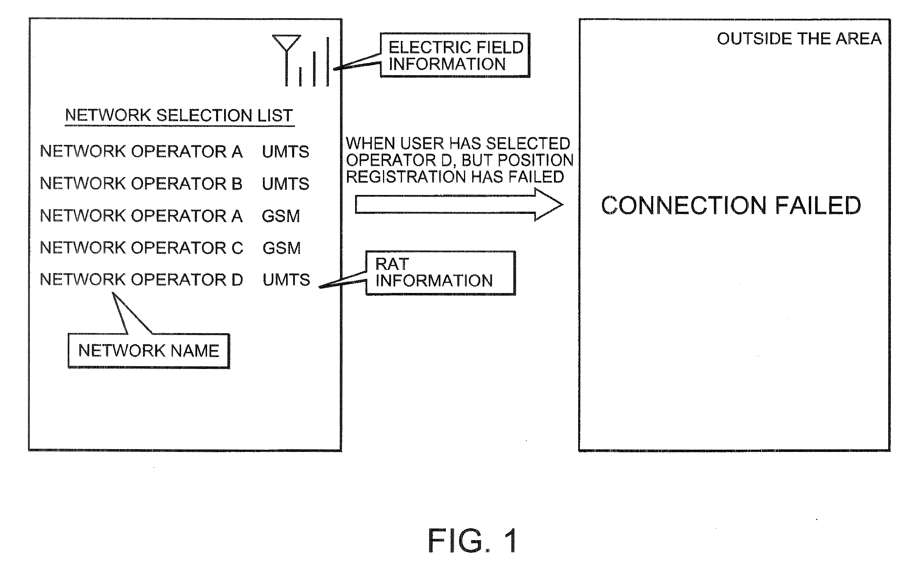

As illustrated in Fig. 1 as one example, detected network operator names (network operators A, B, C, D, etc.) and radio access technologies (RAT: Radio Access Technology) [GSM, UMTS, etc.] thereof are displayed on a network selection screen of a related-art mobile communication terminal.

Incidentally, a technique for a mobile communication terminal to detect and connect one of a plurality of networks is described in, for example, Japanese Unexamined Patent Application Publication (JP-A) No. 2002-271865 or Japanese Unexamined Patent Application Publication (JP-A) No. 2005-236769.

The network selection screen of the above related-art mobile communication terminal has the following problems about respective points, i.e. (1) service type, (2) service area, (3) electric field information, (4) charge information, (5) international telephone calling, (6) radio access technology, (7) position registration, (8) multiple selections, (9) contents schedule, and (10) service start operation.
(1) The problem of the service type is that available providing service types (voice call, TV telephone, international telephone browser, streaming, etc.) of each network are not displayed on the network selection screen of the related-art mobile communication terminal. Therefore, unless a user actually selects and tries a network, the user cannot know whether or not an expected service is available.
(2) The problem of the service area is that service available area information of each network is not displayed on the network selection screen of the related-art mobile communication terminal. Therefore, even if a user selects a certain network, there is a possibility that the user goes out of a service available area with only a slight movement and thus the terminal falls in an out-of-area state.
(3) The problem of the electric field information is that reception electric field information (stability of radio communication) of each network is not displayed on the network selection screen of the related-art mobile communication terminal. Therefore, even if a user selects a certain network, there is a possibility that the user cannot smoothly use a service due to poor radio quality or the terminal falls in an out-of-area state.
(4) The problem of the charge information is that charge information for each of providing service types (voice call, TV telephone, international telephone, browser, streaming, etc.) of each network is not displayed on the network selection screen of the related-art mobile communication terminal. Therefore, a user cannot select and use a lower-rate service and thus has to separately care about a service use rate.
(5) The problem of the international telephone calling is that an international telephone calling method of each network is not displayed on the network selection screen of the related-art mobile communication terminal. Therefore, a user has to find out, in advance, international telephone calling methods of networks to be used.
(6) The problem of the radio access technology is that even if a user selects the type of radio access technology along with a network operator name on the network selection screen of the related-art mobile communication terminal, the terminal falls in an out-of-area state or the type of radio access technology is automatically changed (Cell reselection operation of 3GPP) due to a change in radio environment.
(7) The problem of the position registration is that all detected networks are displayed on the network selection screen of the related-art mobile communication terminal. Therefore, even when a user selects a certain network, if a position registration process fails and thus a service of that network cannot actually be used (screen on the right side in Fig. 1), it takes time for the user to reselect a network.
(8) The problem of the multiple selections is that a user can only select one network at a time on the network selection screen of the related-art mobile communication terminal. Therefore, time for network reselection is required for selecting a different network according to the quality (contents, charge, etc.) of a service to be used.
(9) The problem of the contents schedule is that schedule information (service providing date and time) about providing service contents (weather forecast, news, file download, etc.) of each network is not displayed on the network selection screen of the related-art mobile communication terminal. Therefore, a user needs to separately find out those information. Further, on the network selection screen of the related-art mobile communication terminal, a network selected by a user is fixed. Therefore, it takes time to reselect a network so as to meet the start of those services.
(10) The problems of the service start operation is that, in order for a user to use a desired service, an operation for selecting a network providing the service and further an operation for starting the service are required on the network selection screen of the related-art mobile communication terminal. Particularly, with respect to international telephone calling, methods differ depending on countries and networks, which is troublesome.

### Disclosure of the Invention

Therefore, it is an object of this invention to provide, in order to solve the above problems, a mobile communication system, a mobile communication terminal, and a network selection method for use therein, which make it possible to reliably use a desired service and to select and use a lower-rate service.

The other objects of this invention not specified herein will be made clear from the following description and the accompanying drawings.

An exemplary aspect of a mobile communication system according to this invention is a mobile communication system including a plurality of networks that provide services, respectively, and a mobile communication terminal adapted for communications with the plurality of networks, wherein the mobile communication terminal comprises display means for displaying, on a network selection screen thereof, service providing information about the service based on service information notified from each of the plurality of networks, and selection means for selecting one of the plurality of networks according to an instruction from a user based on the service providing information.

An exemplary aspect of a mobile communication terminal according to this invention is a mobile communication terminal in the above mobile communication system, which comprises the above display means and the above selection means.

An exemplary aspect of a network selection method according to this invention is a network selection method for use in a mobile communication system including a plurality of networks that provide services, respectively, and a mobile communication terminal adapted for communications with the plurality of networks, wherein the mobile communication terminal executes a display step of displaying, on a network selection screen thereof, service providing information about the service based on service information notified from each of the plurality of networks, and a selection step of selecting one of the plurality of networks according to an instruction from a user based on the service providing information.

### Brief Description of the Drawings

Fig. 1 is a diagram illustrating a display example of a network selection screen of a related-art mobile communication terminal.
Fig. 2 is a block diagram illustrating a configuration example of a mobile communication network according to an embodiment of this invention.
Fig. 3 is a block diagram illustrating a configuration example of a mobile communication terminal in Fig. 2.
Fig. 4 is a diagram illustrating a display example of a network selection screen of the mobile communication terminal in Fig. 2.
Fig. 5 is a diagram illustrating a display example of a network selection screen of the mobile communication terminal in Fig. 2.
Fig. 6 is a diagram illustrating a display example of a network selection screen of the mobile communication terminal in Fig. 2.
Fig. 7 is a diagram illustrating a display example of a network selection screen of the mobile communication terminal in Fig. 2.
Fig. 8 is a flowchart illustrating a network selection operation in the mobile communication terminal in Fig. 2.
Fig. 9 is a diagram illustrating a display example of a network selection screen of the mobile communication terminal in Fig. 2.
Fig. 10 is a flowchart illustrating an automatic network switching operation according to a schedule in the mobile communication terminal in Fig. 2.

### Best Mode for Carrying Out the Invention

In a mobile communication terminal of this invention, the display content on a network selection screen is improved. By this, the content of information provided (notified) to a user, a method for the user to use those information to select a network, and the sequence of connection to the network are improved.

Therefore, the problems described in the column of background art of this specification are solved. As a result, it is possible to reliably use a desired service and to select and use a lower-rate service.

A mobile communication terminal according to this invention displays available services (voice, TV telephone, international telephone, browser, streaming, etc.) of each network and charge information per service, without requiring a user to try each network. Therefore, it becomes possible to reliably use a desired service and to select and use a lower-rate service.

Further, a mobile communication terminal of this invention displays service available area and electric field information of each network, without requiring a user to try each network. Therefore, it is possible to prevent that even if the user selects a network, the terminal falls in an out-of-area state with only a slight movement or the user cannot use a service due to poor radio quality, and thus, it becomes possible to receive a good-quality service.

Further, a mobile communication terminal of this invention is configured to make calling, without requiring a user to find out an international telephone calling method of each network. Therefore, in any network all over the world, it becomes possible to easily use an international telephone.

Further, a mobile communication terminal of this invention displays whether or not the position registration is possible with respect to each network, without requiring a user to try each network. Therefore, it is possible to prevent time for reselecting a different network due to failure in position registration after selection of a network.

Further, a mobile communication terminal of this invention enables a user to select a different network for each of services (voice, TV telephone, international telephone, browser, streaming, etc.) to be used. Therefore, it becomes possible to efficiently use better services (contents quality and charge) not depending on networks.

Further, a mobile communication terminal of this invention can display to a user, in advance, service contents (weather forecast, news, file download, etc.) provided by each network and schedule information (service delivery date and time) thereof and makes it possible to automatically switch and select a different network by setting a reception schedule. Therefore, it becomes possible to efficiently use desired service contents without depending on networks.

Further, a mobile communication terminal of this invention can display to a user available services (voice, TV telephone, international telephone, browser, streaming, etc.) and service contents (weather forecast, news, file download, etc.) of each network. Therefore, by selecting the service or the content, it becomes possible to use the selected service or content with no additional menu operation or the like. That is, in the mobile communication terminal of this invention, it becomes possible to search for a desired service without depending on networks and use it, i.e. not searching for an available service after selecting a network.

Next, referring to the drawings, an embodiment of this invention will be described in detail.

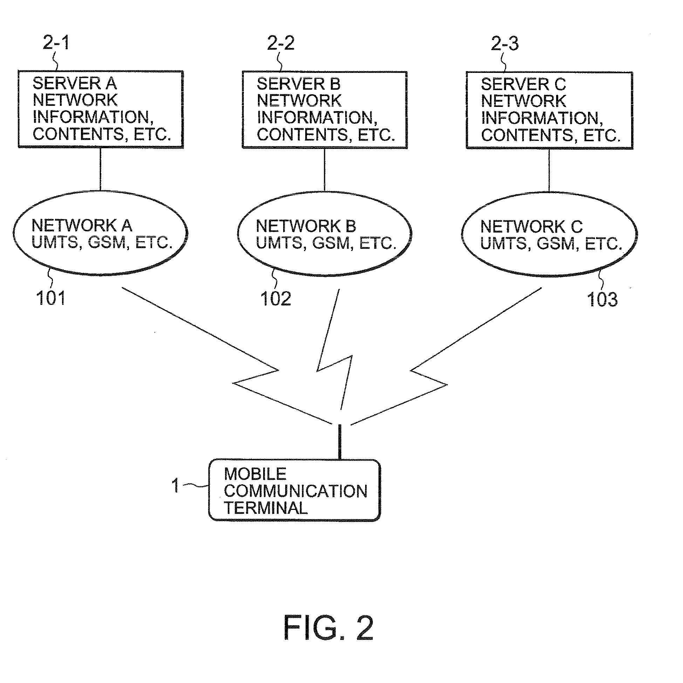

Fig. 2 is a block diagram illustrating a configuration example of a mobile communication network according to the embodiment of this invention. In Fig. 2, this mobile communication network comprises a Mobile communication terminal 1 and servers (A to C) 2-1 to 2-3 connected to networks (A to C) 101 to 103, respectively.

The mobile communication terminal 1 is connectable to the respective networks (A to C) 101 to 103 by radio access technologies (Radio Access Technology) such as UMTS (Universal Mobile Telecommunications System) and GSM (Global System for Mobile communications).

The mobile communication terminal 1 is configured such that when it receives network information notified from each of the networks (A to C) 101 to 103, it displays the received information on a network selection screen thereof. When each of the networks (A to C) 101 to 103 is adapted to a plurality of types of radio access technologies, the different types of radio access technologies are displayed for the same name.

The servers (A to C) 2-1 to 2-3 can respectively provide the mobile communication terminal 1 with the above network information, various contents, and so on through the networks (A to C) 101 to 103 to which the servers (A to C) 2-1 to 2-3 are respectively connected. Each of the networks (A to C) 101 to 103 provides various services (voice call, TV telephone, international telephone, browser, streaming, etc.) to the mobile communication terminal 1.

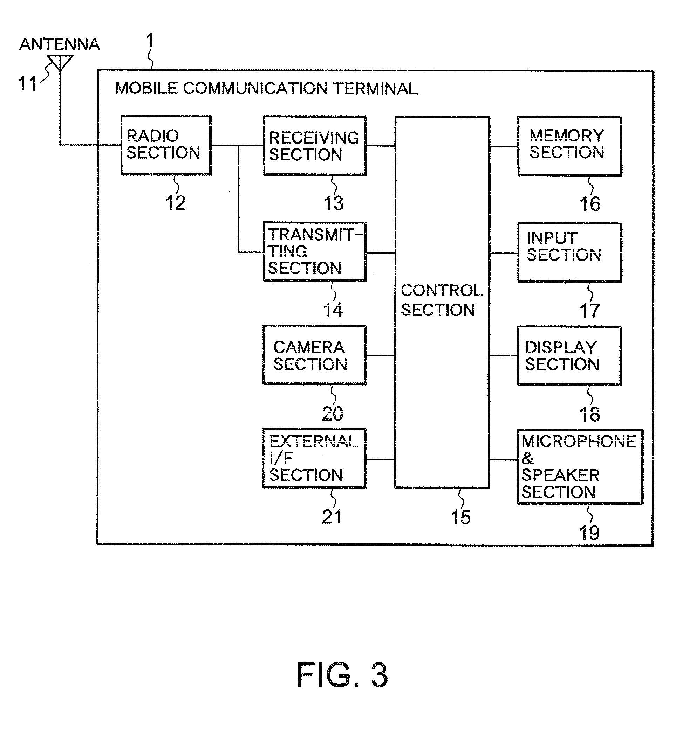

Fig. 3 is a block diagram illustrating a configuration example of the mobile communication terminal 1 in Fig. 2. In Fig. 3, the mobile communication terminal 1 comprises an antenna 11, a radio section 12, a receiving section 13, a transmitting section 14, a control section 15, a memory section 16, an input section 17, a display section 18, a microphone and speaker section 19, a camera section 20, and an external I/F (interface) section 21.

The antenna 11 is an antenna adapted to all of the plurality of types of radio access technologies (UMTS, GSM, etc.), GPS (Global Positioning System), and so on. The radio section 12, the receiving section 13, and the transmitting section 14 are also each adapted to the plurality of types of radio access technologies (UMTS, GSM, etc.), GPS (Global Positioning System), and so on.

The control section 15 controls the respective functional blocks in the mobile communication terminal 1. The memory section 16 is a memory for storing a control program (program executed by the control section 15) for the mobile communication terminal 1, various setting data, downloaded contents and network information, and so on. In this embodiment, the memory section 16 stores network information, service information, contents, delivery schedule information thereof, and so on.

The input section 17 is an input device such as a key pad or an input stick for a user of the mobile communication terminal 1 to start and finish a communication and to perform various setting and so on. In this embodiment, selection of network information, service information, contents, delivery schedule information thereof, and so on is performed through the input section 17.

The display section 18 is display means for showing the state of communication and various setting, images from the camera section 20, images of contents, and so on to the user of the mobile communication terminal 1. In this embodiment, the display section 18 displays network information, service information, contents, delivery schedule information thereof, and so on.

The microphone and speaker section 19 is an input/output device for performing voice communication, TV telephone audio input and output, contents audio reproduction, and so on. The camera section 20 is an imaging element used as an input device for images in a TV telephone and as a camera device. The external I/F section 21 is an interface for USB (Universal Serial Bus), a memory card, and so on.

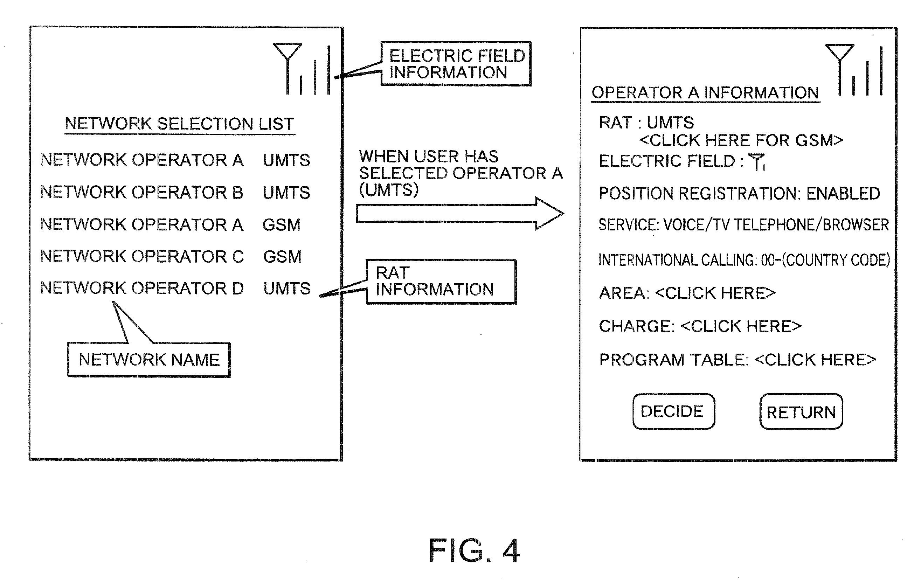

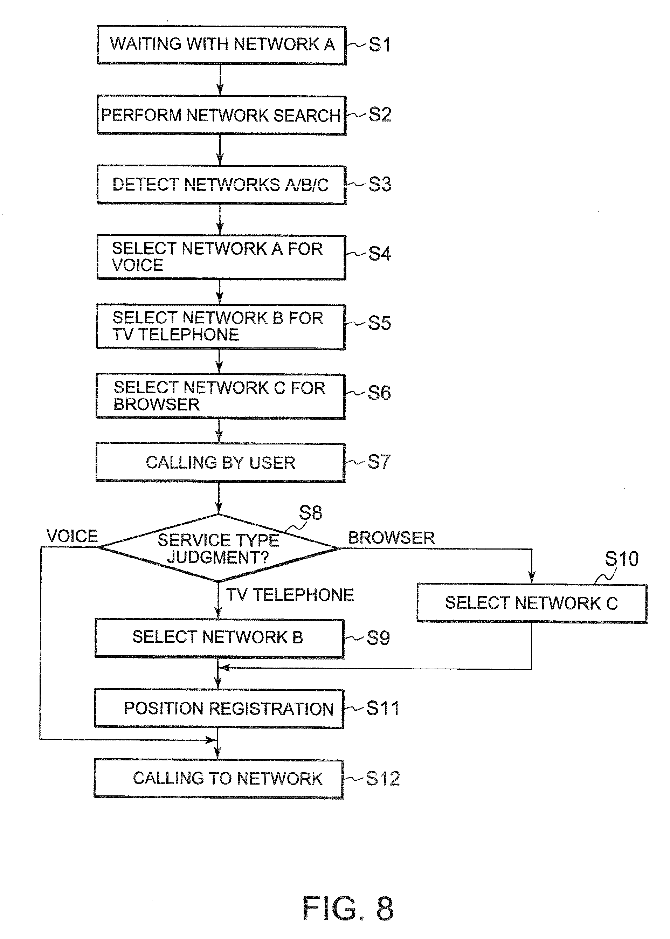

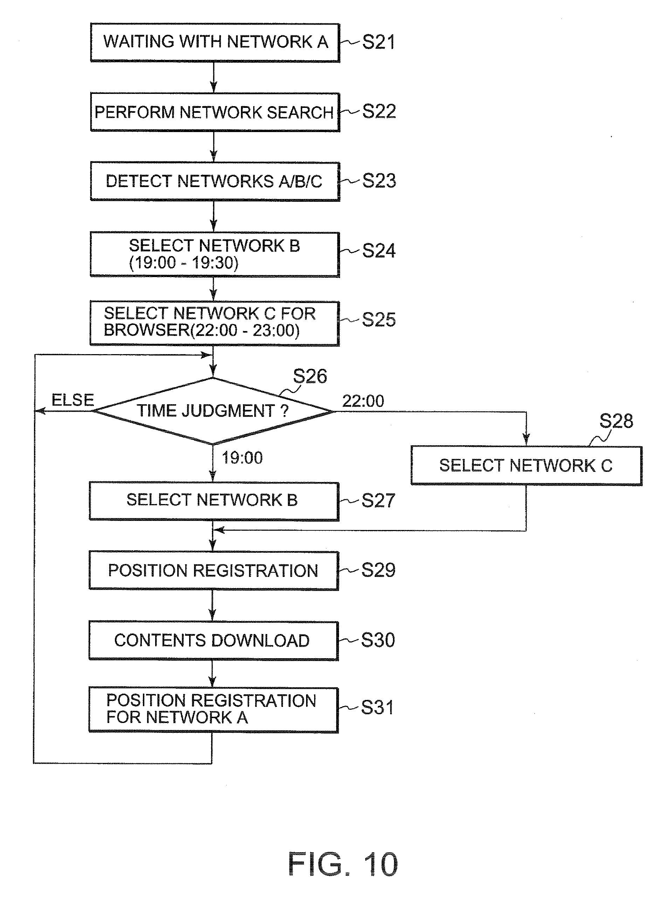

Figs. 4 to 7 and 9 are diagrams each illustrating a display example of the network selection screen of the mobile communication terminal 1 illustrates in Fig. 3. Fig. 8 is a flowchart illustrating a network selection operation in the mobile communication terminal 1 illustrated in Fig. 3. Fig. 10 is a flowchart illustrating an automatic network switching operation based on a schedule in the mobile communication terminal 1 according to the embodiment of this invention. Referring to Figs. 2 to 10, the operation of the mobile communication terminal 1 according to the embodiment of this invention will be described. Note that processes illustrated in Figs. 8 and 10 are realized by the control section 15 executing the control program in the memory section 16.

In Fig. 4, a left-side screen is a screen displaying a list of choices of networks detected from network information notified to the mobile communication terminal 1 from the networks (A to C) 101 to 103. On the other hand, a right-side screen is a screen shifted to when the user has selected a network operator A (UMTS).

Herein, the left-side screen displays a list of a network operator A (UMTS), a network operator B (UMTS), a network operator A (GSM), a network operator C (GSM), and a network operator D (UMTS). However, illustration of a network D is omitted in Fig. 2.

On the right-side screen, if "Decide" is pressed by the user through the input section 17, position registration is performed for the network operator A (UMTS). On the other hand, if "Return" is pressed, the screen returns to the left-side screen. These screens are only display examples of the display section 18 of the mobile communication terminal 1. If there is no limitation to information notification means (screen size etc.), for the user, of the mobile communication terminal 1, all information to be described later may be notified to the user at a time (on one screen) with respect to all the networks.

### [Embodiment 1]

In this embodiment, providing service types (voice, TV telephone, international telephone, browser, streaming, etc.) notified from each of the networks (A to C) 101 to 103 are displayed on the network selection screen of the mobile communication terminal 1. Based on the displayed information, the user can select the network. In this case, it may be configured that, among the providing service types, those service types supported by (adapted to) the mobile communication terminal 1 are displayed and, based on such information, the user can select the network.

In the case of the example illustrated in Fig. 4, "Voice/TV Telephone/Browser" are available with the network operator A (UMTS) as displayed as services on the right-side screen.

### [Embodiment 2]

In this embodiment, service available area information notified from each of the networks (A to C) 101 to 103 is displayed on the network selection screen of the mobile communication terminal 1. Based on the displayed information, the user can select the network. In this case, it is displayed whether or not the service is actually available within a certain prescribed moving distance (e.g., within an area of a radius of 20km or the like, separately settable) from the current position (GPS information or the like) of the mobile communication terminal 1. It may be configured that the user can select the network based on such information. A calculation method of the current position is not particularly referred to in this embodiment.

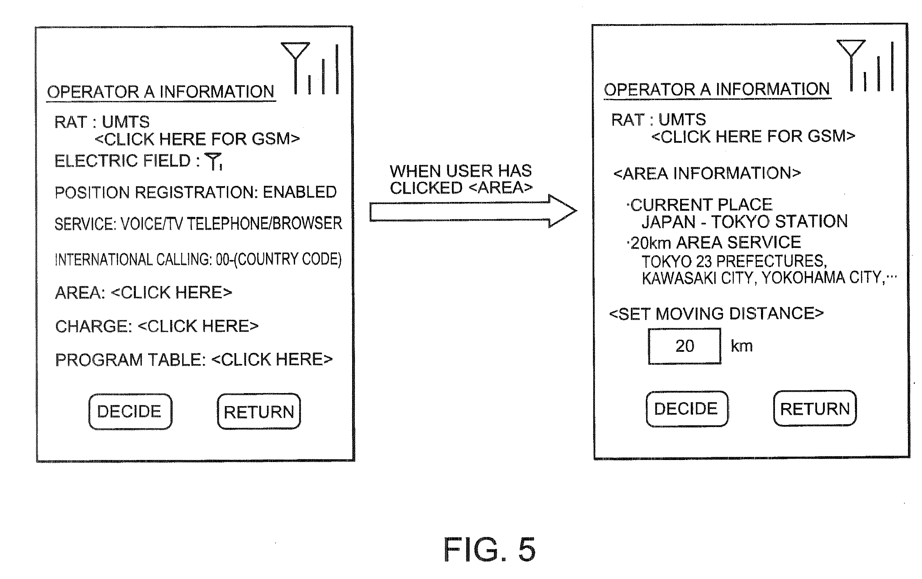

Fig. 5 illustrates a service area display example according to this embodiment. The display example of Fig. 5 shows a case where the current place of the user is Tokyo Station and the area is set within a radius of 20km. In this case, it may be configured that an actual map is displayed on the network selection screen of the mobile communication terminal 1 and a service area is displayed in a specific color.

In Fig. 5, if "Area" is clicked and selected by the user through the input section 17 on a left-side screen, a right-side screen is displayed. That is, "Tokyo 23 Prefectures, Kawasaki City, Yokohama City, ..." is displayed on the right-side screen as "20km-Radius Area Service" from the current place "Japan - Tokyo Station".

Further, in this embodiment, reception electric field information (stability of radio communication) measured from radiowaves of each of the networks (A to C) 101 to 103 is displayed on the network selection screen of the mobile communication terminal 1 so that the user can select the network based on the displayed information.

In the case of the example illustrated in Fig. 4, "one antenna bar" is displayed on the right-side screen as reception electric field information about the network operator A (UMTS) and thus it is seen that the reception electric field thereof is not good.

### [Embodiment 3]

In this embodiment, charge information for each of providing service types (voice, TV telephone, international telephone, browser, streaming, etc.) notified from each of the networks (A to C) 101 to 103 is displayed on the network selection screen of the mobile communication terminal 1. Based on the displayed information, the user can select the network. In this case, it may be configured that charge information actually imposed within a certain prescribed time (e.g., within two hours, separately settable) from the current time of the mobile communication terminal 1 is displayed and, based on such information, the user can select the network.

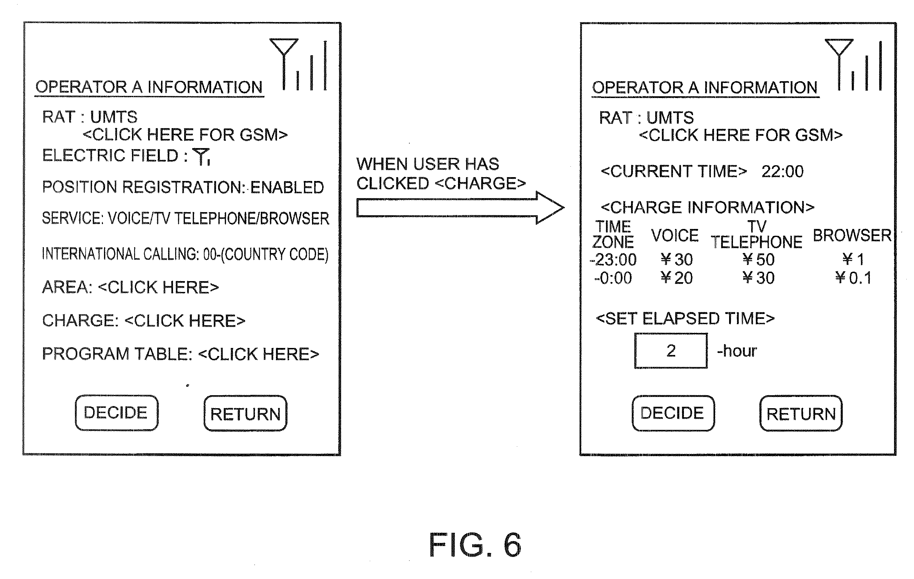

Fig. 6 illustrates a charge information display example according to this embodiment. In Fig. 6, there is illustrated a case where the current time is "22:00" and the time is set within two hours. In Fig. 6, if "Charge" is clicked and selected by the user through the input section 17 on a left-side screen, a right-side screen is displayed. That is, it is displayed on the right-side screen as "charge information within two hours" from the current time "22:00" that voice "¥30", TV telephone "¥50", and browser "¥1" when the time zone is "23:00", while, voice "¥20", TV telephone "¥30", and browser "¥0.1" when the time zone is "0:00".

Further, in this embodiment, an international telephone calling method notified from each of the networks (A to C) 101 to 103 is displayed on the network selection screen of the mobile communication terminal 1 so that the user can easily make an international telephone call based on the displayed information. In the case of the example illustrated in Fig. 4, it is seen that international telephone calling is enabled with "00-country code" for the network operator A (UMTS).

### [Embodiment 4]

Further, in this embodiment, on the network selection screen of the mobile communication terminal 1, information about the types of available radio access technologies (GSM, UMTS, etc.) notified from the networks (A to C) 101 to 103 is displayed and the above various information (service, service area, reception electric field information, charge information, international calling method, etc.) are displayed for each of the types of radio access technologies of each network. Based on the displayed information, the user can select a combination of the network and the type of radio access technology. In this case, it may be configured that when selecting a combination of the network and the type of radio access technology, the user can select one of two modes, i.e. the mode that fixes the type of radio access technology and the mode that fixes the type of radio access technology, but allows changing the type of radio access technology depending on a change in radio environment.

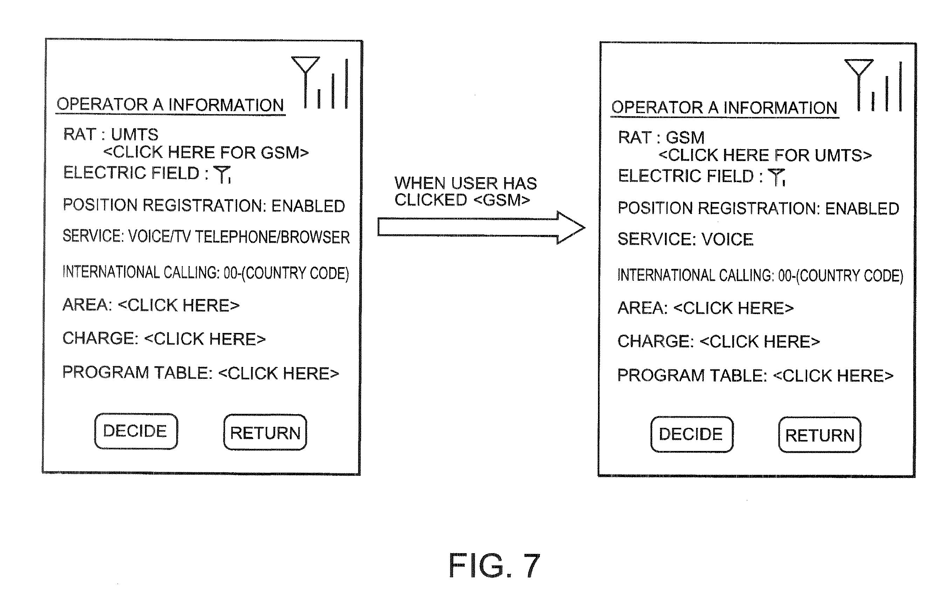

Fig. 7 illustrates a display example of the types of radio access technologies according to this embodiment. In Fig. 7, if GSM is clicked and selected by the user through the input section 17 on a left-side screen, a right-side screen is displayed. In this case, "one antenna bar" is displayed as reception electric field information and only "Voice" is displayed as a service. By this, it is seen that although the electric field is good with GSM, TV telephone or browser cannot be used.

In this embodiment, position registration is attempted for all the networks (A to C) 101 to 103 and further the types of radio access technologies. As a result of attempting the position registration, enabled/disabled of the position registration for the networks (A to C) 101 to 103 and a reason for position registration failure (no roaming contract, temporary network limitation, or the like) are displayed on the network selection screen of the mobile communication terminal 1. Based on the displayed information, the user can select the network.

In this case, it may be configured that the above various information (service, service area, reception electric field information, charge information, international calling method, etc.) of each networks enabled with the position registration are displayed and, based on such information, the user can select the network. In the case of example illustrated in Fig. 4, it is seen that the position registration is "Enabled" for the network operator A (UMTS).

### [Embodiment 5]

Further, in this embodiment, the user can simultaneously select a plurality of the networks (A to C) 101 to 103 on the network selection screen of the mobile communication terminal 1.

In this case, the user can select the different network for each of service types (voice, TV telephone, international telephone, browser, streaming, etc.). In this case, if the user selects the different network for each of the service types (voice, TV telephone, international telephone, browser, streaming, etc.), each time the user starts to use the service (voice calling or the like), the position registration and the start of the service are automatically requested to the network selected for that service.

Hereinbelow, the operation for simultaneously selecting the plurality of networks as described above in the mobile communication terminal 1 will be described with reference to Fig. 8.

At first, while the mobile communication terminal 1 is waiting with the network (A) 101 (step S1), a network search is performed (step S2) and the networks A/B/C are detected (step S3).

Herein, for example, the network (A) 101 is selected for the voice service (step S4), the network (B) 102 is selected for the TV telephone service (step S5), and the network (C) 103 is selected for the browser service (step S6).

When calling by a user is instructed (step S7), the mobile communication terminal 1 judges the service type for that calling (step S8).

If the service type is judged to be voice, the mobile communication terminal 1, since it is waiting with the network (A) 101, makes calling to the network (A) 101 as it is (step S12).

If the service type is judged to be TV telephone, the mobile communication terminal 1, since it is waiting with the network (A) 101, selects the network (B) 102 (step S9), performs position registration for the network (B) 102 (step S11), and makes calling to the network (B) 102 (step S12).

If the service type is judged to be browser, the mobile communication terminal 1, since it is waiting with the network (A) 101, selects the network (C) 103 (step S10), performs position registration for the network (C) 103 (step S11), and makes calling to the network (C) 103 (step S12).

As described above, in this embodiment, the user selects the different network for each of the service types (voice, TV telephone, international telephone, browser, streaming, etc.) and, each time the user starts to use the service (voice calling or the like), the position registration and the start of the service are automatically requested to the network selected for that service. By this, it is possible to easily perform connection to the corresponding networks (A to C) 101 to 103.

### [Embodiment 6]

In this embodiment, by the user setting a schedule (date and time) on the network selection screen of the mobile communication terminal 1, a plurality of the networks (A to C) 101 to 103 are automatically switched according to the schedule.

In this case, it may be configured that schedule information (service delivery date and time) about providing service contents (weather forecast, news, file download, etc.) notified from each of the networks (A to C) 101 to 103 is displayed on the network selection screen. Based on the displayed information, the user can select the network. In this event, by the user selecting a plurality of the services of a plurality of the networks (A to C) 101 to 103, scheduling is automatically performed. According to this schedules, the plurality of networks (A to C) 101 to 103 are automatically switched.

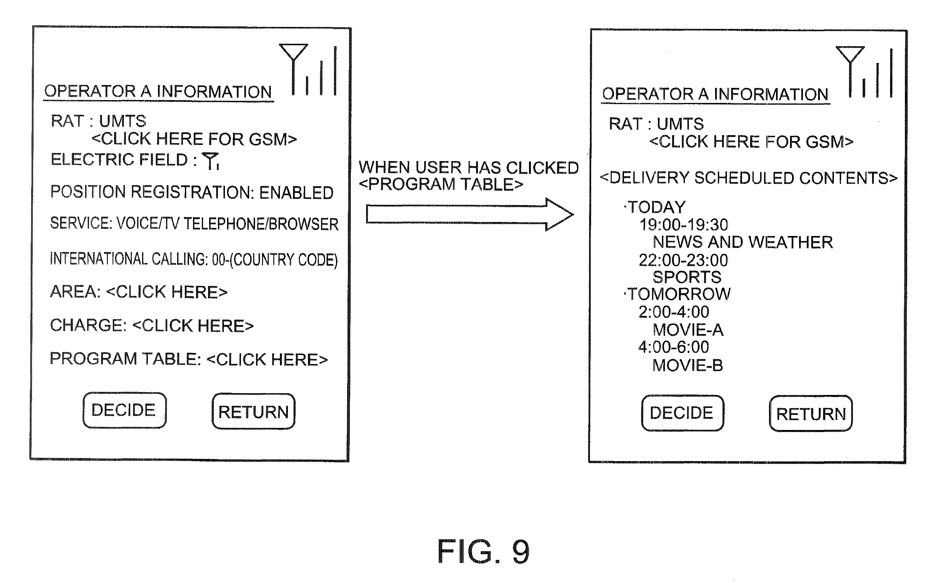

Fig. 9 illustrates a display example of schedule information about the above contents. In Fig. 9, if "Program Table" is clicked and selected by the user through the input section 17 on a left-side screen, a right-side screen is displayed. In this case, as "Delivery Scheduled Contents", "19:00-19:30 News and Weather" and "22:00-23:00 Sports" are displayed as programs of "Today" and "2:00-4:00 Movie A" and "4:00-6:00 Movie B" are displayed as programs of "Tomorrow".

Hereinbelow, the operation for automatic network switching according to a schedule as described above in the mobile communication terminal 1 will be described with reference to Fig. 10.

At first, while the mobile communication terminal 1 is waiting with the network (A) 101 (step S21), a network search is performed (step S22) and the networks. A/B/C are detected (step S23).

Herein, for example, the network (B) 102 is set to be selected for a schedule "19:00-19:30" (step S24) and the network (C) 103 is set to be selected for a schedule "22:00-23:00" (step S25).

The mobile communication terminal 1 makes a judgment by comparison between the schedule times set in the precedent steps and the current time (step 26). If, as a result of the judgment, the current time is other than the above schedule times, the operation returns to step 26 to repeat a judgment of the current time.

When the current time becomes 19:00 of the above schedule, the mobile communication terminal 1 selects the network (B) 102 (step S27). Then, the mobile communication terminal 1 performs position registration for the network (B) 102 (step S29) and downloads the contents through the network (B) 102 (step S30). Thereafter, position registration is performed for the network (A) 101 (step S31).

When the current time becomes 22:00 of the above schedule, the mobile communication terminal 1 selects the network (C) 103 (step S28). Then, the mobile communication terminal 1 performs position registration for the network (C) 103 (step S29) and downloads the contents through the network (C) 103 (step S30). Thereafter, position registration is performed for the network (A) 101 (step S31).

In the embodiment described above, on the network selection screen of the mobile communication terminal 1, the providing service types (voice, TV telephone, international telephone, browser, streaming, etc.) and the providing service contents (weather forecast, news, file download, etc.) notified from each of the networks (A to C) 101 to 103 are displayed and the user selects them. That is, with no additional menu operation (international telephone calling number or the like), the position registration is performed for the automatically selected network and the selected service is started. As seen from such an embodiment, this invention is based on the technical idea that a network is determined by selecting a desired service, i.e. not selecting an available service after selecting a network as in the related art.

In the case of the example illustrated in Fig. 4, if characters of "Service: Voice" are clicked, position registration is performed for the operator A (UMTS) and the screen is shifted to a voice calling screen. On the other hand, if characters of "service: Browser" are clicked, a browser is launched to obtain a top page.

Various information, i.e. (1) service type, (2) service area, (4) charge information, (5) international telephone calling method, (6) radio access technology, (9) service contents schedule information (service delivery date and time), and (10) service contents, are, as will be described later, notified to the mobile communication terminal 1 from each of the networks (A to C) 101 to 103 using notification signals. Alternatively, instead of using the notification signals, it may be configured that, for example, these information are provided, in advance, on websites run by the respective networks (A to C) 101 to 103 and the mobile communication terminal 1 downloads and uses those information.

In this embodiment, the services provided by the networks (A to C) 101 to 103 positively appeal to the user of the mobile communication terminal 1 and further the user's convenience is improved, so that more users come to use those networks.

The mobile communication network according to this embodiment notifies the mobile communication terminal 1 of providing service types (voice, TV telephone, international telephone, browser, streaming, etc.), service available area information, charge information for each of the providing service types (voice, TV telephone, international telephone, browser, streaming, etc.), international telephone calling method information, information about the types of available radio access technologies (GSM, UMTS, etc.), and schedule information (service providing date and time) about providing service contents (weather forecast, news, file download, etc.), respectively.

Thus, in this embodiment, the user of the mobile communication terminal 1 can know, in advance, available services (voice, TV telephone, international telephone, browser, streaming, etc.) of each of the networks (A to C) 101 to 103 and charge information per service without selecting and trying each of the networks (A to C) 101 to 103. As a result, it is possible not only to reliably use a desired service, but also to select and use a lower-rate service.

Further, in this embodiment, the user of the mobile communication terminal 1 can know, in advance, service available area and electric field information of each of the networks (A to C) 101 to 103 without selecting and trying each network. As a result, it is possible to prevent that even if the user selects a network, the terminal falls in an out-of-area state with only a slight movement or the user cannot use a service due to poor radio quality. That is, it is possible to receive a good-quality service.

Further, in this embodiment, since the user of the mobile communication terminal 1 can know an international telephone calling method of each network, there is no need to find out the calling method in advance. As a result, in any network all over the world, it is possible to easily use an international telephone.

Further, in this embodiment, the user of the mobile communication terminal 1 can know in advance whether or not position registration is possible with respect to each of the networks (A to C) 1 01 to 103 without selecting and trying each of the networks (A to C) 101 to 103. As a result, it is possible to prevent time for reselecting a different network due to failure in position registration after selection of a network.

Further, in this embodiment, the user of the mobile communication terminal 1 can select a different network for each of services (voice, TV telephone, international telephone, browser, streaming, etc.) to be used. Therefore, it is possible to efficiently use better services (contents quality and charge) not depending on networks.

Further, in this embodiment, the user of the mobile communication terminal 1 can know, in advance, service contents (weather forecast, news, file download, etc.) provided by each of the networks (A to C) 101 to 103 and schedule information (service delivery date and time) thereof and it becomes possible to automatically switch and select a different network by setting a reception schedule. Therefore, it is possible to efficiently use desired service contents without depending on networks.

Further, in this embodiment, the user of the mobile communication terminal 1 can know available services (voice, TV telephone, international telephone, browser, streaming, etc.) and service contents (weather forecast, news, file download, etc.) of each of the networks (A to C) 101 to 103 and, by selecting the service or the content, can use the selected service or content with no additional menu operation or the like. Therefore, in this embodiment, it is possible to search for a desired service without depending on networks and use it, i.e. not searching for an available service after selecting a network.

The user interfaces (screen layout and wording) illustrated in Figs. 4 to 7 and 9 described above are only examples. This invention is not limited thereto and they can be used in combination thereof.

While this invention has been described in terms of the preferred embodiment, the mobile communication system, the mobile communication terminal, and the network selection method for use therein according to this invention are not limited to the foregoing embodiment and those with various modifications and changes from the configuration of the embodiment are also included in the scope of this invention.

This application claims priority based on Japanese Patent Application No. 2006-202657, filed on July 26, 2006, the disclosure of which is incorporated herein in its entirety.

## Claims

1. A mobile communication system including a plurality of networks that provide services, respectively, and a mobile communication terminal adapted for communications with said plurality of networks;
**characterized in that** said mobile communication terminal comprises:
display means for displaying, on a network selection screen thereof, service providing information about said service based on service information notified from each of said plurality of networks, and
selection means for selecting one of said plurality of networks according to an instruction from a user based on said service providing information.

2. A mobile communication system according to claim 1, wherein said service providing information is information indicative of whether or not the service is actually available within a prescribed moving distance from a current position based on service available area information notified from each of said plurality of networks.

3. A mobile communication system according to claim 1 or 2, wherein said service providing information is charge information imposed within a prescribed time from a current time with respect to charge information for each of providing service types including at least one of functions of voice call, TV telephone, international telephone, browser, and streaming.

4. A mobile communication system according to any one of claims 1 to 3, wherein said service providing information is information indicative of an international telephone calling method, and
said mobile communication terminal makes international telephone calling based on said information.

5. A mobile communication system according to any one of claims 1 to 4, wherein said service providing information is information of combination of each of said plurality of networks and a type of radio access technology corresponding thereto, and
said mobile communication terminal selects one of two modes being the mode that fixes the type of radio access technology and the mode that allows changing the type of radio access technology depending on a change in radio environment.

6. A mobile communication system according to any one of claims 1 to 5, wherein said service providing information is information based on a result of attempting, in advance, position registration with respect to the combination of each of said plurality of networks and the type of radio access technology corresponding thereto, said information indicative of enabled/disabled of the position registration and, when the position registration is disabled, a reason for failure of the position registration including at least no roaming contract or temporary network limitation.

7. A mobile communication system according to any one of claims 1 to 6, wherein said display means displays said service providing information when the result of attempting, in advance, the position registration with respect to the combination of each of said plurality of networks and the type of radio access technology corresponding thereto is that the position registration is enabled.

8. A mobile communication system according to any one of claims 1 to 7, wherein said selection means simultaneously selects a plurality of the networks.

9. A mobile communication system according to any one of claims 3 to 8, wherein said selection means selects the different network for each of said providing service types.

10. A mobile communication system according to claim 9, wherein if said selection means selects the different network for each of said providing service types, each time the service starts to be used, said selection means requests position registration and the start of the service to the network selected for said service.

11. A mobile communication system according to any one of claims 1 to 10, wherein said selection means switchingly selects said plurality of networks according to a preset schedule.

12. A mobile communication system according to any one of claims 1 to 11, wherein said service providing information is schedule information about providing service contents including at least one of weather forecast, news, and file.

13. A mobile communication system according to any one of claims 1 to 12, wherein said selection means switchingly selects a plurality of preselected services according to respective schedules thereof.

14. A mobile communication system according to claim 12, wherein said service providing information is said providing service types and said providing service contents, and
said selection means selects the network based on said providing service type and said providing service content instructed from the user and, further, starts the service provided by the selected network after performing position registration for said network.

15. A mobile communication system including a plurality of networks that provide services, respectively, and a mobile communication terminal adapted for communications with said plurality of networks;
**characterized in that** said mobile communication terminal comprises:
download means for downloading service providing information about said service from a site of each of said plurality of networks,
display means for displaying said service providing information on a network selection screen thereof, and
selection means for selecting one of said plurality of networks according to an instruction from a user based on said service providing information.

16. A mobile communication system according to claim 15, wherein said service providing information is information about providing service types including at least one of functions of voice call, TV telephone, international telephone, browser, and streaming.

17. A mobile communication system according to claim 16, wherein said display mean displays the service type supported by said mobile communication terminal in said information about the providing service types.

18. A mobile communication system according to any one of claims 15 to 17, wherein said service providing information is service available area information.

19. A mobile communication system according to claim 18, wherein said service providing information is information indicative of whether or not the service is actually available within a prescribed moving distance from a current position based on said service available area information.

20. A mobile communication system according to any one of claims 16 to 19, wherein said display means displays charge information for each of said providing service types.

21. A mobile communication system according to claim 20, wherein said display means displays charge information imposed within a prescribed time from a current time in said charge information for each of said providing service types.

22. A mobile communication system according to any one of claims 15 to 21, wherein said service providing information is information indicative of an international telephone calling method, and
said mobile communication terminal makes international telephone calling based on said information.

23. A mobile communication system according to any one of claims 15 to 22, wherein said download means downloads information about types of providing available radio access technologies from the site of each of said plurality of networks, and
said display means displays said service providing information for each of the types of radio access technologies.

24. A mobile communication system according to any one of claims 15 to 23, wherein said service providing information is schedule information about providing service contents indicative of at least one of weather forecast, news, and file.

25. A mobile communication system according to claim 24, wherein said selection means switchingly selects a plurality of preselected services according to respective schedules thereof.

26. A mobile communication system according to claim 24, wherein said service providing information is said providing service types and said providing service contents, and
said selection means selects the network based on said providing service type and said providing service content instructed from the user and, further, starts the service provided by the selected network after performing position registration for said network.

27. A mobile communication terminal according to any one of claims 1 to 26.

28. A network selection method for use in a mobile communication system including a plurality of networks that provide services, respectively, and a mobile communication terminal adapted for communications with said plurality of networks;
**characterized in that** said mobile communication terminal executes:
a display step of displaying, on a network selection screen thereof, service providing information about said service based on service information notified from each of said plurality of networks, and
a selection step of selecting one of said plurality of networks according to an instruction from a user based on said service providing information.

29. A network selection method according to claim 28, wherein said service providing information is information indicative of whether or not the service is actually available within a prescribed moving distance from a current position based on service available area information notified from each of said plurality of networks.

30. A network selection method according to claim 28 or 29, wherein said service providing information is charge information imposed within a prescribed time from a current time with respect to charge information for each of providing service types including at least one of functions of voice call, TV telephone, international telephone, browser, and streaming.

31. A network selection method according to any one of claims 28 to 30, wherein said service providing information is information indicative of an international telephone calling method, and
said mobile communication terminal makes international telephone calling based on said information.

32. A network selection method according to any one of claims 28 to 31, wherein said service providing information is information of combination of each of said plurality of networks and a type of radio access technology corresponding thereto, and
said mobile communication terminal selects one of two modes being the mode that fixes the type of radio access technology and the mode that allows changing the type of radio access technology depending on a change in radio environment.

33. A network selection method according to any one of claims 28 to 32, wherein said service providing information is information based on a result of attempting, in advance, position registration with respect to the combination of each of said plurality of networks and the type of radio access technology corresponding thereto, said information indicative of enabled/disabled of the position registration and, when the position registration is disabled, a reason for failure of the position registration including at least no roaming contract or temporary network limitation.

34. A network selection method according to any one of claims 28 to 33, wherein, in said display step, said mobile communication terminal displays said service providing information when the result of attempting, in advance, the position registration with respect to the combination of each of said plurality of networks and the type of radio access technology corresponding thereto is that the position registration is enabled.

35. A network selection method according to any one of claims 28 to 34, wherein, in said selection step, said mobile communication terminal simultaneously selects a plurality of the networks.

36. A network selection method according to any one of claims 30 to 35, wherein, in said selection step, said mobile communication terminal selects the different network for each of said providing service types.

37. A network selection method according to claim 36, wherein, in said selection step, if said mobile communication terminal selects the different network for each of said providing service types, each time the service starts to be used, said mobile communication terminal requests position registration and the start of the service to the network selected for said service.

38. A network selection method according to any one of claims 28 to 37, wherein, in said selection step, said mobile communication terminal switchingly selects said plurality of networks according to a preset schedule.

39. A network selection method according to any one of claims 28 to 38, wherein said service providing information is schedule information about providing service contents including at least one of weather forecast, news, and file.

40. A network selection method according to any one of claims 28 to 39, wherein, in said selection step, said mobile communication terminal switchingly selects a plurality of preselected services according to respective schedules thereof.

41. A network selection method according to claim 39, wherein said service providing information is said providing service types and said providing service contents, and
said mobile communication terminal, in said selection step, selects the network based on said providing service type and said providing service content instructed from the user and, further, starts the service provided by the selected network after performing position registration for said network.

42. A network selection method for use in a mobile communication system including a plurality of networks that provide services, respectively, and a mobile communication terminal adapted for communications with said plurality of networks;
**characterized in that** said mobile communication terminal executes:
a download step of downloading service providing information about said service from a site of each of said plurality of networks,
a display step of displaying said service providing information on a network selection screen thereof, and
a selection step of selecting one of said plurality of networks according to an instruction from a user based on said service providing information.

43. A network selection method according to claim 42, wherein said service providing information is information about providing service types including at least one of functions of voice call, TV telephone, international telephone, browser, and streaming.

44. A network selection method according to claim 43, wherein, in said display step, said mobile communication terminal displays the service type supported by said mobile communication terminal in said information about the providing service types.

45. A network selection method according to any one of claims 42 to 44, wherein said service providing information is service available area information.

46. A network selection method according to claim 45, wherein said service providing information is information indicative of whether or not the service is actually available within a prescribed moving distance from a current position based on said service available area information.

47. A network selection method according to any one of claims 43 to 46, wherein, in said display step, said mobile communication terminal displays charge information for each of said providing service types.

48. A networks selection method according to clam 47, wherein, in said display step, said mobile communication terminal displays charge information imposed within a prescribed time from a current time in said charge information for each of said providing service types.

49. A network selection method according to any one of claims 42 to 48, wherein said service providing information is information indicative of an international telephone calling method, and
said mobile communication terminal makes international telephone calling based on said information.

50. A network selection method according to any one of claims 42 to 49, wherein said mobile communication terminal downloads, in said download step, information about types of providing available radio access technologies from the site of each of said plurality of networks, and
displays, in said display step, said service providing information for each of the types of radio access technologies.

51. A network selection method according to any one of claims 42 to 50, wherein said service providing information is schedule information about providing service contents indicative of at least one of weather forecast, news, and file.

52. A network selection method according to claim 51, wherein, in said selection step, said mobile communication terminal switchingly selects a plurality of preselected services according to respective schedules thereof.

53. A network selection method according to claim 51, wherein said service providing information is said providing service types and said providing service contents, and
said mobile communication terminal, in said selection step, selects the network based on said providing service type and said providing service content instructed from the user and, further, starts the service provided by the selected network after performing position registration for said network.
